# EUROPEAN PATENT SPECIFICATION

(11) **EP 2 749 551 B1**
(45) Date of publication and mention of the grant of the patent: **04.11.2015**
(21) Application number: 13199613.4
(22) Date of filing: 26.12.2013
(51) Int. Cl.: A01C 15/02, C05G 3/00, C05B 7/00, B65B 3/04

(54) **Fertilizer contained in a toothpaste type dispenser**
Dünger, in einem Zahnpasta-ähnlichen Behalter enthalten
Fertilisant contenu dans un conteneur du type dentifrice

(30) Priority: 29.12.2012 CN 201210588078
(43) Date of publication of application: 02.07.2014
(73) Proprietor: Guangdong Dazhong Agriculture Science Co., Ltd., Dongguan Guangdong (CN)
(72) Inventor: Lin, Xiaoming, Dongguan city, Guangdong Province (CN)
(74) Representative: Decamps, Alain René François

(56) References cited:
- GB-A- 2 172 569
- US-A1- 2007 045 340

## Description

### FIELD OF THE INVENTION

The present invention belongs to the technical field of fertilizer, and relates to toothpaste casing type fertilizer in particular.

### BACKGROUND OF THE INVENTION

Fertilizer is a kind of substances that offer one or more than one nutrition element that is necessary for plants, improves the soil property and improves the soil fertility level, and is one of the material bases for agricultural production. At present, many plant enthusiasts in urban families may culture some plants such as flowers and vegetables in balcony or indoors. To supply the plants with nutrition elements, fertilizer is used necessarily.

The fertilizer on the market at present includes bagged fertilizer and bottled liquid fertilizer. Both packages of the bagged fertilizer and the bottled liquid fertilizer are large packages. Even if a buyer such as the enthusiast in the urban family requires a few amount of fertilizer, the buyer still needs to purchase large-package fertilizer at one time. The large-package fertilizer causes inconvenience to a user and also causes resource waste at the same time. Moreover, the residual fertilizer is difficult to save and store, and taste of the fertilizer will spill out to affect the living environment.

In addition, the existing bagged fertilizer and the existing bottled liquid fertilizer cannot appear on goods shelves of various shopping malls and supermarkets, and cannot server as fast-moving consumer goods since the weight and size caused by the large package limit sales and popularization of the fertilizer.

GB-A-2172569 (Warner-Lambert) discloses a capsule-type container, which can be used for fertilizers. US-A1-2007/045340 discloses a pocketable container in the form of a resealable packet, which can contain fertilizers.

### SUMMARY OF THE INVENTION

The present invention aims at overcoming the defects of the prior art, and provides a toothpaste casing type fertilizer whose package tends to miniaturization and facilitation. The toothpaste casing type fertilizer is convenient to use, is easy to save and store, and serves as fast-moving consumer goods.

In order to realize the above target, the technical proposal of the present invention is as follows:

A toothpaste casing type fertilizer, the toothpaste casing type fertilizer comprises a toothpaste casing and paste fertilizer contained in the toothpaste casing.

Preferably, the toothpaste casing is a soft toothpaste casing.

Preferably, the toothpaste casing is a plastic toothpaste casing or an aluminum plastic toothpaste casing.

Preferably, the surface of the toothpaste casing is provided with a pattern layer.

Preferably, the toothpaste casing type fertilizer further comprises a cover body; the cover body is divided into a front end containing space and a back end connecting area through a mesh separation blade; the inside of the front end containing space is provided with water retaining agent, and the back end connecting area is connected to the toothpaste casing.

Preferably, the back end of the toothpaste casing is provided with a tearing part.

The preparation method for toothpaste casing type fertilizer, fertilizer is mixed into paste firstly to obtain paste fertilizer, and then the paste fertilizer is contained in a toothpaste casing.

Preferably, the detailed preparation steps of the toothpaste casing type fertilizer are as follows: counted by weight, adding 140-200 portions of water into 10-20 portions of biomass coke powder, 80-100 portions of potassium fulvic acid, 200-650 portions of nitrate, 100-460 portions of monoammonium phosphate, 60-90 portions of urea, 5-10 portions of seaweed meal, 0.2-1 portion of polyacrylamide, 2-5 portions of calcium sulfate, 1.5-3 portions of manganese sulfate, 0.5-1.5 portions of ferrous sulfate, 0.5-2 portions of zinc sulfate, 0.8-1.5 portions of copper sulfate and 0.5-1.5 portions of ammonium molybdate to mix into paste to obtain paste fertilizer.

Preferably, the grain size of the biomass coke powder is 10-100µm.

Compared with the prior art, the invention has the advantages that: The present invention belongs to the technical field of fertilizer, and relates to toothpaste toothpaste casing type fertilizer particularly, which includes a toothpaste casing and paste fertilizer contained in the toothpaste casing. The toothpaste casing type fertilizer breaks a traditional fertilizer split charging mode, and the fertilizer is contained in the toothpaste casing to enable a package of the fertilizer to tend to miniaturization and facilitation, which avoids troublesome caused by buying large-package fertilizer and brings conveniences for to a plant culturist in an urban family; when in use, squeezing out the fertilizer in a needed amount like squeezing toothpaste is only required; after completion of use, the fertilizer is easy to save and store, and no taste of the fertilizer is spilled out. The toothpaste casing type fertilizer can serve as a fast-moving consumer goods with large business value and appeared in various shopping malls and supermarkets, and can further serve as a gift for presenting relatives and friends.

### BRIEF DESCRIPTION OF THE DRAWINGS

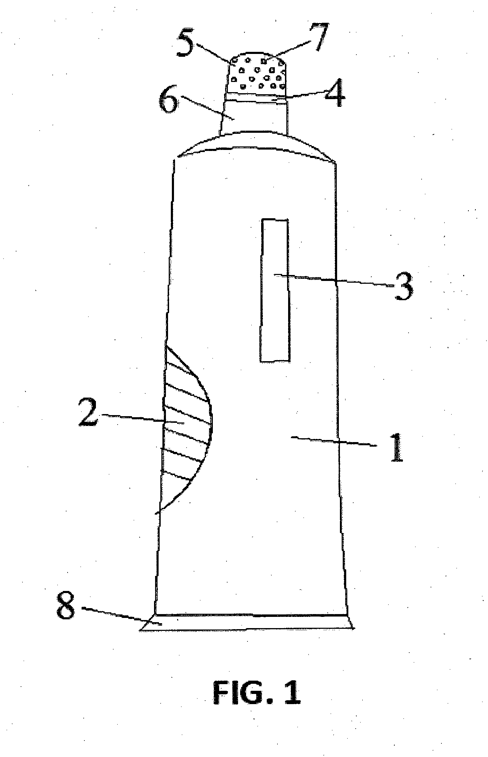

FIG. 1 is a structure diagram of the present invention.

### DETAILED DESCRIPTIONS OF THE PREFERRED EMBODIMENTS

To be convenient for a person skilled in the art to understand, the following further introduces the present invention in details with reference to the embodiments. However, the protection scope of the present invention is not limited to the embodiments below.

### Embodiment 1

Referring to FIG. 1, toothpaste casing type fertilizer includes a toothpaste casing 1 and paste fertilizer 2 contained in the toothpaste casing 1. Of course, the fertilizer is not surely limited to paste, and may also be liquid or grain. The toothpaste casing 1 is a traditional toothpaste containing casing, and the size of the toothpaste casing 1 may be set as required. The toothpaste casing type fertilizer breaks a traditional fertilizer split charging mode, and the fertilizer is contained in the toothpaste casing 1 to enable a package of the fertilizer to tend to miniaturization and facilitation, which avoids troublesome caused by buying large-package fertilizer and brings conveniences for to a plant culturist in an urban family; when in use, squeezing out the fertilizer in a needed amount like squeezing toothpaste is only required; after completion of use, the fertilizer is easy to save and store, and no taste of the fertilizer is spilled out. The toothpaste casing type fertilizer can serve as a fast-moving consumer goods appeared in various shopping malls and supermarkets, and can further serve as a gift for presenting relatives and friends.

The toothpaste casing 1 is a plastic toothpaste casing 1. In particular, the toothpaste casing 1 is a plastic toothpaste casing or an aluminum plastic toothpaste casing, which is convenient to squeeze out the paste fertilizer 2.

The surface of the toothpaste casing 1 is provided with a pattern layer 3. The pattern layer 3 may be printed with an identity playing a role of propagandizing such as a trademark or propagandizing characters, and the like.

The toothpaste casing type fertilizer further includes a cover body. The cover body is divided into a front end containing space 5 and a back end connecting area 6 through a mesh separation blade 4. The inside of the front end containing space 5 is provided with water retaining agent. The back end connecting area 6 is connected to the toothpaste casing 1. When the package of the toothpaste casing type fertilizer is torn, the water retaining agent of the front end containing space 5 may be fully absorbed with water, so as to supplement water to the paste fertilizer 2 to prevent the paste fertilizer 2 from being dry and caking. To be specific, the back end connecting area 6 and the toothpaste casing 1 are connected in a threaded way. After completion of use, the back end connecting area 6 and the toothpaste casing 1 are connected to prevent the water in the paste fertilizer 2 from volatilization.

The back end of the toothpaste casing 1 is provided with a tearing part 8. When the paste fertilizer 2 is almost used up, the paste fertilizer 2 is difficult to be squeezed out from the front end of the toothpaste casing 1. At this moment, the back end of the toothpaste casing 1 may be torn from the tearing part 8, and the paste fertilizer 2 may be squeezed out from the back end of the toothpaste casing 1.

A preparation method for a toothpaste casing type fertilizer includes the step as follows: fertilizer is mixed into paste firstly to obtain paste fertilizer 2, and then the paste fertilizer 2 is contained in a toothpaste casing 1.

The detailed preparation steps of the toothpaste casing type fertilizer 2 are as follows: counted by weight, adding 140 portions of water into 10 portions of biomass coke powder, 80 portions of potassium fulvic acid, 200 portions of nitrate, 100 portions of monoammonium phosphate, 60 portions of urea, 5 portions of seaweed meal, 0.2 portion of polyacrylamide, 2 portions of calcium sulfate, 1.5 portions of manganese sulfate, 0.5 portions of ferrous sulfate, 0.5 portions of zinc sulfate, 0.8 portions of copper sulfate and 0.5 portions of ammonium molybdate to mix into paste to obtain paste fertilizer 2. The fertilizer efficiency of the paste fertilizer 2 prepared through the preparation method above is as long as 3 months. Flowers cultured by the fertilizer are arboreous.

The grain size of the biomass coke powder is 10µm. The inside of the biomass coke includes a plurality of ducts, which not only may play a role of retaining water, but also is beneficial for slowly releasing the fertilizer efficiency. The above effect of the grain size of the biomass coke powder of the grain size is better.

### Embodiment 2

The difference between this embodiment and embodiment 1 is as follows: The detailed preparation steps of the toothpaste casing type fertilizer 2 are as follows: counted by weight, adding 180 portions of water into 15 portions of biomass coke powder, 90 portions of potassium fulvic acid, 450 portions of nitrate, 350 portions of monoammonium phosphate, 75 portions of urea, 8 portions of seaweed meal, 0.7 portion of polyacrylamide, 4 portions of calcium sulfate, 2 portions of manganese sulfate, 1 portions of ferrous sulfate, 1.5 portions of zinc sulfate, 1.2 portions of copper sulfate and 1.2 portions of ammonium molybdate to mix into paste to obtain paste fertilizer 2. The fertilizer efficiency of the paste fertilizer 2 prepared through the preparation method above is as long as 4 months. Flowers cultured by the fertilizer are arboreous.

The grain size of the biomass coke powder is 70µm. The inside of the biomass coke includes a plurality of ducts, which not only may play a role of retaining water, but also is beneficial for slowly releasing the fertilizer efficiency. The above effect of the grain size of the biomass coke powder of the grain size is better.

### Embodiment 3

The difference between this embodiment and embodiment 1 is as follows: The detailed preparation steps of the toothpaste toothpaste casing type fertilizer 2 are as follows: counted by weight, adding 200 portions of water into 20 portions of biomass coke powder, 100 portions of potassium fulvic acid, 650 portions of nitrate, 460 portions of monoammonium phosphate, 90 portions of urea, 10 portions of seaweed meal, 1 portion of polyacrylamide, 5 portions of calcium sulfate, 3 portions of manganese sulfate, 1.5 portions of ferrous sulfate, 2 portions of zinc sulfate, 1.5 portions of copper sulfate and 1.5 portions of ammonium molybdate to mix into paste to obtain paste fertilizer 2. The fertilizer efficiency of the paste fertilizer 2 prepared through the preparation method above is as long as 4 months.

Flowers cultured by the fertilizer are arboreous.

The grain size of the biomass coke powder is 100µm. The inside of the biomass coke includes a plurality of ducts, which not only may play a role of retaining water, but also is beneficial for slowly releasing the fertilizer efficiency. The above effect of the grain size of the biomass coke powder of the grain size is better.

The foregoing descriptions are merely preferred embodiments of the present invention, but are not intended to limit the embodiments of the present invention. Therefore, equivalent variation made according to the patent application scope of the present invention shall fall within the protection scope of the present invention.

## Claims

1. A toothpaste casing type fertilizer, wherein the toothpaste casing type fertilizer comprises a toothpaste casing (1) and paste fertilizer (2) contained in the toothpaste casing (1).

2. The toothpaste casing type fertilizer according to claim 1, **characterized in that** the toothpaste casing is a soft toothpaste casing.

3. The toothpaste casing type fertilizer according to any preceding claim, **characterized in that** the toothpaste casing is a plastic toothpaste casing or an aluminum plastic toothpaste casing.

4. The toothpaste casing type fertilizer according to any preceding claim, **characterized in that** the surface of the toothpaste casing is provided with a pattern layer (3).

5. The toothpaste casing type fertilizer according to any preceding claim, **characterized in that** the toothpaste casing type fertilizer further comprises a cover body; the cover body being divided into a front end containing space (5) and a back end connecting area (6) through a mesh separation blade (4); the inside of the front end containing space (5) being provided with water retaining agent, and the back end connecting area (6) being connected to the toothpaste casing (1).

6. The toothpaste casing type fertilizer according to any preceding claim, characterize in that the back end of the toothpaste casing is provided with a tearing part (8).

7. A preparation method for a toothpaste casing type fertilizer according to claim 1, **characterized in that** fertilizer is mixed into paste firstly to obtain paste fertilizer (2), and then the paste fertilizer (2) is contained in a toothpaste casing (1).

8. The preparation method for a toothpaste casing type fertilizer according to claim 7, **characterized in that** detailed preparation steps of the toothpaste casing type fertilizer are as follows: counted by weight, adding 140-200 portions of water into 10-20 portions of biomass coke powder, 80-100 portions of potassium fulvic acid, 200-650 portions of nitrate, 100-460 portions of monoammonium phosphate, 60-90 portions of urea, 5-10 portions of seaweed meal, 0.2-1 portion of polyacrylamide, 2-5 portions of calcium sulfate, 1.5-3 portions of manganese sulfate, 0.5-1.5 portions of ferrous sulfate, 0.5-2 portions of zinc sulfate, 0.8-1.5 portions of copper sulfate and 0.5-1.5 portions of ammonium molybdate to mix into paste to obtain paste fertilizer.

9. The reparation method for a toothpaste casing type fertilizer according to claim 8, **characterized in that** the grain size of the biomass coke powder is 10-100µm.

## Patentansprüche

1. Düngemittel in Zahnpastatubenform, wobei das Düngemittel in Zahnpastatubenform eine Zahnpastatube (1) und ein in der Zahnpastatube (1) enthaltenes pastöses Düngemittel (2) umfasst.

2. Düngemittel in Zahnpastatubenform nach Anspruch 1, **dadurch gekennzeichnet, dass** die Zahnpastatube eine weiche Zahnpastatube ist.

3. Düngemittel in Zahnpastatubenform nach einem der vorhergehenden Ansprüche, **dadurch gekennzeichnet, dass** die Zahnpastatube eine Kunststoff-Zahnpastatube oder eine Aluminium-Zahnpastatube ist.

4. Düngemittel in Zahnpastatubenform nach einem der vorhergehenden Ansprüche, **dadurch gekennzeichnet, dass** die Oberfläche der Zahnpastatube mit einer Bildschicht (3) versehen ist.

5. Düngemittel in Zahnpastatubenform nach einem der vorhergehenden Ansprüche, **dadurch gekennzeichnet, dass** das Düngemittel in Zahnpastatubenform einen Verschlusskörper umfasst, wobei der Verschlusskörper durch ein Trenngitterblatt (4) in einen vorderen Aufnahmeraum (5) und einen hinteren Verbindungsbereich (6) geteilt ist, wobei das Innere des vorderen Aufnahmeraums (5) mit einem Wasserretentionsmittel versehen ist und der hintere Anschlussbereich (6) mit der Zahnpastatube (1) verbunden ist.

6. Düngemittel in Zahnpastatubenform nach einem der vorhergehenden Ansprüche, **dadurch gekennzeichnet, dass** das hintere Ende der Zahnpastatube mit einem Aufreissteil (8) versehen ist.

7. Herstellverfahren für ein Düngemittel in Zahnpastatubenform nach Anspruch 1, **dadurch gekennzeichnet, dass** Düngemittel zunächst in eine Paste gemischt wird, um ein pastöses Düngemittel (2) zu erhalten, und das pastöse Düngemittel (2) dann in einer Zahnpastatube (1) aufgenommen wird.

8. Herstellverfahren für ein Düngemittel in Zahnpastatubenform nach Anspruch 7, **dadurch gekennzeichnet, dass** die einzelnen Herstellschritte des Düngemittels in Zahnpastatubenform die folgenden sind: bezogen auf das Gewicht, Zugeben von 140 - 200 Anteilen von Wasser zu 10 - 20 Anteilen von Biomasse-Kokspulver, 80 - 100 Anteilen von Kalium-Fulvinsäure, 200 - 650 Anteilen von Nitrat, 100 - 460 Anteilen von Monoammoniumphosphat, 60 - 90 Anteilen von Harnstoff, 5 - 10 Anteilen von Seealgenmehl, 0,2 - 1 Anteilen von Polyacrylamid, 2 - 5 Anteilen von Calciumsulfat, 1,5 - 3 Anteilen von Mangansulfat, 0,5 - 1,5 Anteilen von Eisensulfat, 0,5 - 2 Anteilen von Zinksulfat, 0,8 - 1,5 Anteilen von Kupfersulfat und 0,5 - 1,5 Anteilen von Ammoniummolybdat und Vermischen zu einer Paste, um pastöses Düngemittel zu erhalten.

9. Herstellungsverfahren für ein Düngemittel in Zahnpastatubenform nach Anspruch 8, **dadurch gekennzeichnet, dass** die Korngröße des Biomasse-Kokspulvers 10 - 100µ beträgt.

## Revendications

1. Engrais du type à conditionnement en tube dentifrice, dans lequel l'engrais du type à conditionnement en tube dentifrice comprend un conditionnement en tube dentifrice (1) et un engrais en pâte (2) contenu dans le conditionnement en tube dentifrice (1).

2. Engrais du type à conditionnement en tube dentifrice selon la revendication 1, **caractérisé par le fait que** le conditionnement en tube dentifrice est un conditionnement en tube dentifrice souple.

3. Engrais du type à conditionnement en tube dentifrice selon l'une quelconque des revendications précédentes, **caractérisé par le fait que** le conditionnement en tube dentifrice est un conditionnement en tube dentifrice en matière plastique ou un conditionnement en tube dentifrice en aluminium et matière plastique.

4. Engrais du type à conditionnement en tube dentifrice selon l'une quelconque des revendications précédentes, **caractérisé par le fait que** la surface du conditionnement en tube dentifrice est dotée d'une couche à motifs (3).

5. Engrais du type à conditionnement en tube dentifrice selon l'une quelconque des revendications précédentes, **caractérisé par le fait que** l'engrais du type à conditionnement en tube dentifrice comprend en outre un corps de capuchon, le corps de capuchon étant divisé en un espace de confinement d'extrémité avant (5) et une zone de liaison d'extrémité arrière (6) par une lame de séparation à maille (4), l'intérieur de l'espace de confinement d'extrémité avant (5) étant doté d'un agent rétenteur d'eau, et la zone de liaison d'extrémité arrière (6) étant reliée au conditionnement en tube dentifrice (1).

6. Engrais du type à conditionnement en tube dentifrice selon l'une quelconque des revendications précédentes, **caractérisé par le fait que** l'extrémité arrière du conditionnement en tube dentifrice est dotée d'une partie de déchirure (8).

7. Procédé de préparation pour un engrais du type à conditionnement en tube dentifrice selon la revendication 1, **caractérisé par le fait que** l'engrais est mélangé en une pâte tout d'abord pour obtenir un engrais en pâte (2), puis l'engrais en pâte (2) est contenu dans un conditionnement en tube dentifrice (1).

8. Procédé de préparation pour un engrais du type à conditionnement en tube dentifrice selon la revendication 7, **caractérisé par le fait que** les étapes de préparation détaillées de l'engrais du type à conditionnement en tube dentifrice sont les suivants : en comptant en poids, ajouter 140-200 parties d'eau dans 10-20 parties de poudre de coke de biomasse, 80-100 parties de fulvate de potassium, 200-650 parties de nitrate, 100-460 parties de phosphate monoammonique, 60-90 parties d'urée, 5-10 parties de farine d'algues, 0,2-1 partie de polyacrylamide, 2-5 parties de sulfate de calcium, 1,5-3 parties de sulfate de manganèse, 0,5-1,5 partie de sulfate ferreux, 0,5-2 parties de sulfate de zinc, 0,8-1,5 partie de sulfate de cuivre et 0,5-1,5 partie de molybdate d'ammonium à mélanger en une pâte pour obtenir un engrais en pâte.

9. Procédé de préparation pour un engrais du type à conditionnement en tube dentifrice selon la revendication 8, **caractérisé par le fait que** la dimension de grain de la poudre de coke de biomasse est 10-100 µm.
